# EUROPEAN PATENT APPLICATION

(11) **EP 2 143 325 A1**
(43) Date of publication of application: **13.01.2010**
(21) Application number: 09397520.9
(22) Date of filing: 01.07.2009
(51) Int. Cl.: A01K 85/01

(54) **Fishing lure having lateral ball movement within a tube**

(30) Priority: 07.07.2008 US 168548
(71) Applicant: Rapala Vmc Corporation, 17200 Vääksy (FI)
(72) Inventor: Leppälä, Harri, 17200 Vääksy (FI)
(74) Representative: Haimelin, Jukka Ilmari

(57) **Abstract**

A fishing lure configured to produce an audible noise while being fished is, generally disclosed. The fishing lure includes a lure body (12), a hollow tube (18), and a ball (20). The hollow tube can be positioned within the lure body and oriented substantially in the y-direction of the lure. The ball is positioned within the hollow tube such that the ball can move freely with the hollow tube to produce the audible noise. A method of fishing using a fishing lure is also disclosed.

## Description

### Background of the Invention

Sport fishing is enjoyed around the world. From fresh water to salt water, a wide variety of fish species exist. Fishermen employ a variety of equipment and tackle depending upon the water being fished, the time of day, the species of fish sought, personal choice, and many other factors. A fishing lure, sometimes referred to as an artificial lure, is frequently a part of such equipment and tackle.

Lures can also be designed with features that make the lure realistic in a functional manner. Fins, diving planes, spinners, and the like may be added in order to make the lure move like a food source. Some lures may be specifically designed to operate on the water surface while others may function only when below.

Fishing lures are typically designed and decorated with the goal of replicating or mimicking the movement and appearance of a food source for the particular fish being sought. For example, such lure may take on the shape of a minnow, tadpole, frog, mouse, insect, salamander, another fish, or such other food source. The fisherman's hope is that by having a lure closely resembling or acting like a source of food, fish will be enticed into biting the lure.

A fishing lure can also include other attraction mechanisms designed to entice a fish to strike the lure, including those mechanisms that produce an audible noise. For example, lures communing referred to as "rattle traps" generally have at least one ball encased within a hard, hollow lure body shell. When fished, the movement of the lure causes these balls to move randomly within the hollow lure body shell and create a rattling noise. However, such rattle traps produce a random rattle that is not controllable while the lure is being fished.

As such, a need exists to provide a fishing lure that can produce a controlled audible noise to help attract and entice a fish to strike the lure.

### Summary of the Invention

Objects and advantages of the invention will be set forth in part in the following description, or may be obvious from the description, or may be learned through practice of the invention.

A fishing lure configured to produce an audible noise while being fished is, in one embodiment, generally disclosed. The fishing lure includes a lure body, a hollow tube, and a ball. The hollow tube can be positioned within the lure body and oriented substantially in the y-direction of the lure. The ball is positioned within the hollow tube such that the ball can move freely with the hollow tube to produce the audible noise.

A method of fishing using a fishing lure is also disclosed. The fishing lure, such as described above, can be cast into a body of water. Then, the lure can be moved (e.g., retrieved, trolled, etc.) through the body of water such that when the fishing lure moves through the water, the ball moves from one end of the hollow tube to the other end causing an audible sound to be emitted by the fishing lure.

Other features and aspects of the present invention are discussed in greater detail below.

### Brief Description of the Drawings

A full and enabling disclosure of the present invention, including the best mode thereof to one skilled in the art, is set forth more particularly in the remainder of the specification, which includes reference to the accompanying figures, in which:
Figure 1 is a cut-away perspective view of an exemplary fishing lure of the present invention;
Figure 2 is a side view of the exemplary fishing lure of Figure 1; and
Figures 2A-2B are internal views of the hollow tube and ball of the exemplary fishing lure of Figure 2.

Repeat use of reference characters in the present specification and drawings is intended to represent the same or analogous features or elements of the present invention.

### Detailed Description

Reference now will be made to the embodiments of the invention, one or more examples of which are set forth below. Each example is provided by way of an explanation of the invention, not as a limitation of the invention. In fact, it will be apparent to those skilled in the art that various modifications and variations can be made in the invention without departing from the scope or spirit of the invention. For instance, features illustrated or described as one embodiment can be used on another embodiment to yield still a further embodiment. Thus, it is intended that the present invention cover such modifications and variations as come within the scope of the appended claims and their equivalents. It is to be understood by one of ordinary skill in the art that the present discussion is a description of exemplary embodiments only, and is not intended as limiting the broader aspects of the present invention, which broader aspects are embodied exemplary constructions.

In general, the present disclosure is directed to a fishing lure configured to produce an audible noise while being fished. The audible noise produced by the lure can help attract fish in the area to the lure and entice those fish to strike the lure. The fishing lure can, in one particular embodiment, produce a repeating "clack-clack-clack" as the lure is retrieved or trolled through the water. Without wishing to be bound by theory, the present inventor believes that the repeating rattle, and particularly the steady, repeating "clack-clack-clack" sound, can pique the interest of a nearby fish and entice a strike by the fish out of curiosity.

In order to produce the audible noise, the fishing lure includes a ball positioned within a hollow tube. The hollow tube is positioned within the inner cavity of the lure body and oriented in the y-direction that stretches across the body of the lure from one side to an opposite side in the lure.

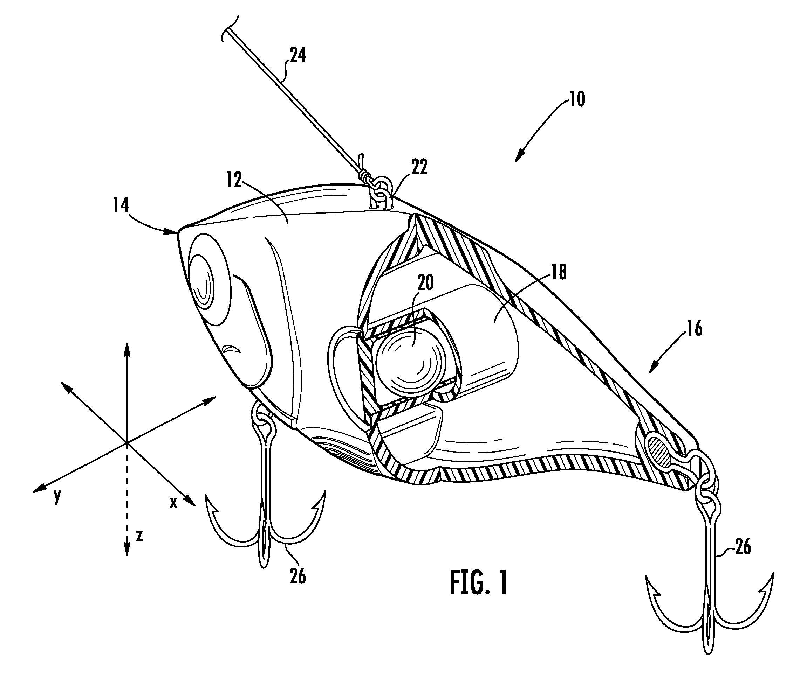

Referring to the cut-away perspective view of the exemplary fishing lure 10 shown in Figure 1, a lure body 12 defines a x-direction, a y-direction and a z-direction. The x-direction extends the length of the fishing lure in its longitudinal direction (i.e., from a head portion 14 to a tail portion 16 of the lure body 12). The y-direction is substantially perpendicular to the x-direction and extends in the lure's lateral direction (i.e., from one side of the lure body 12 to an opposite side of the lure body 12). The z-direction extends from the top of the lure body 12 to the bottom of the lure body 12.

As shown in the embodiment depicted in Figures 1-2, a hollow tube 18 is positioned within the lure body 12 and is oriented substantially in the y-direction across the lure body (i.e., from one side of the lure body to an opposite side). In one particular embodiment, the ends of the hollow tube 18 can be constructed of metal (e.g., steel, stainless steel, lead, titanium, and alloys and combination thereof) in order to maximize the sound created when the ball 20 hits the side. However, the hollow tube 18 can be made out of any hard material that can be shaped into a tube, such as plastics, wood, and the like. Also, combinations of materials can be used to manufacture the hollow tube 18.

The hollow tube 18 is, in one particular embodiment, generally cylindrical in shape. As such, the hollow tube 18 has two ends and a curved body. The size of the hollow tube 18 can depend on the size on the lure body 12. For example, the ends of the hollow tube 18 can be made flush with each side of the lure body 12, such as shown in Figures 1-2. In this embodiment, the curved body of the tube is hidden within an aperture 13 defined substantially in the y-direction of the lure body 12. However, the entire hollow tube 18 can be hidden within the lure body 12, if desired.

In one embodiment, the curved body of the hollow tube 18 can be defined by the aperture 13 formed within the lure body 12. In this embodiment, the curved body of the hollow tube 18 can be formed from the same material as the lure body 12 (e.g., plastic). Then, the ends of the hollow tube 18 can be attached (e.g., adhered) to the lure body 12 to create the closed tube. In this embodiment, the ends of the hollow tube 18 can be made out of a material that helps control the audible sound produced by the lure (e.g., pitch, volume, etc.). For example, the ends can be metal plates used to cap the curved body of the hollow tube 18.

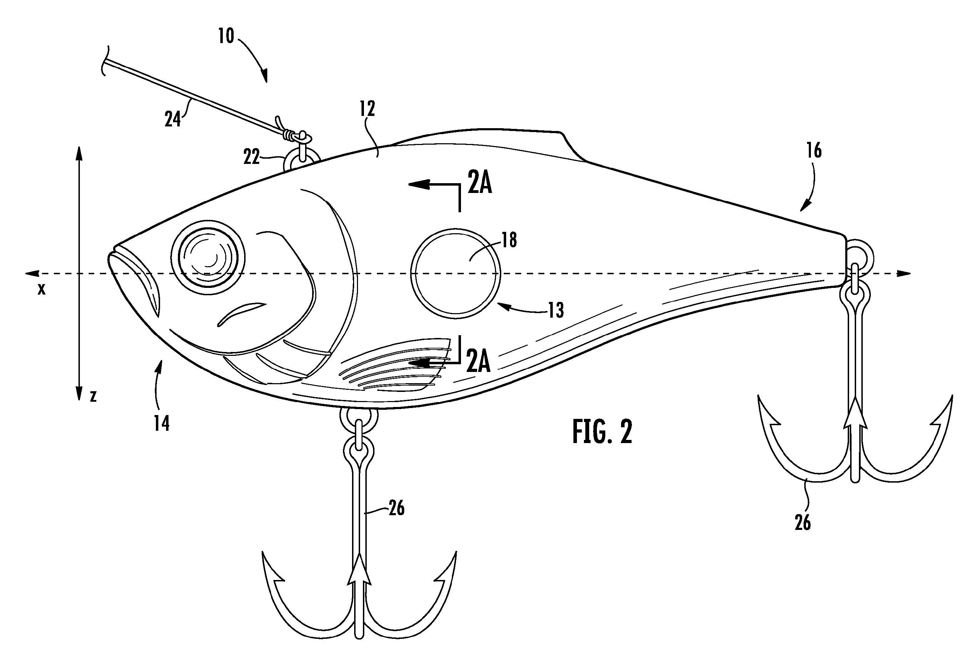

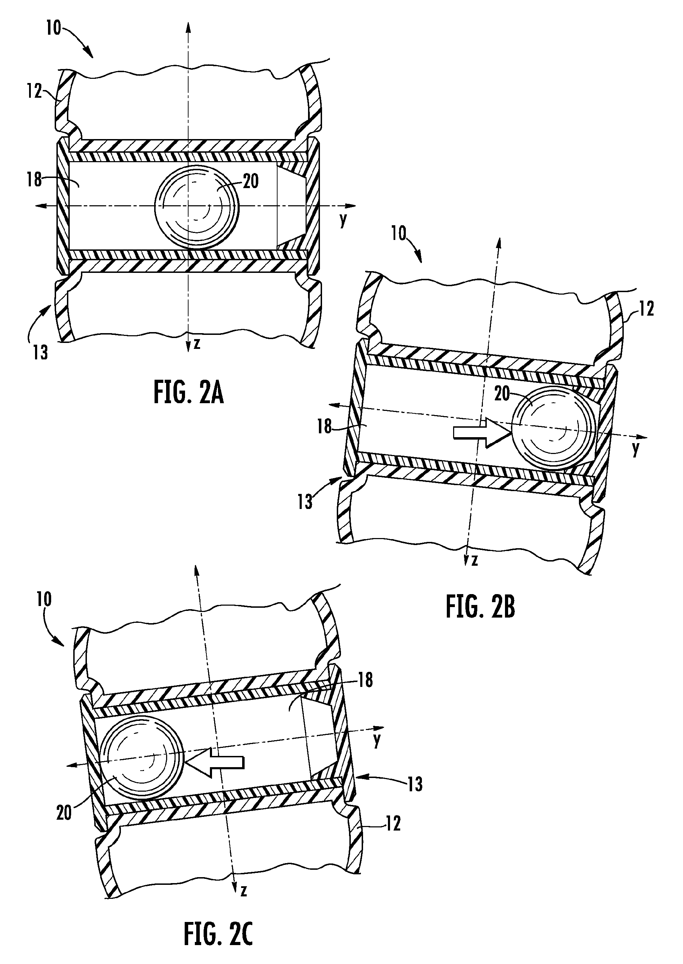

By oriented the hollow tube laterally in the y-direction, the ball 20 can move side-to-side within the hollow tube 18 as the lure vibrates and moves through the water. The ball 20 is positioned within the hollow tube 18 such that the ball 20 can move freely with the hollow tube 18 to produce an audible noise as it hits each end of the hollow tube 18. Specifically, when the ball 20 contacts each end of the hollow tube 18, an audible sound is made. The reaction of the ball 20 striking the end of the hollow tube 18, along with the vibration of the lure body, can make the ball 20 move across the hollow tube 18 and strike the opposite side end of the hollow tube 18. Figures 2A-2C represent this side-to-side movement of the ball 20 within the hollow tube 18 as the lure vibrates.

The ball 20 can be made of any suitable material configured to produce an audible noise when it strikes the side end of the hollow tube 18. For example, the ball 20 can be constructed of metal (e.g., steel, stainless steel, lead, titanium, and alloys and combination thereof) in order to maximize the sound created when the ball 20 hits the side end of the hollow tube 18. Additionally, the use of a heavier metal material to construct the ball can exaggerate the side-to-side vibration of the lure 10 while it is being fished, due to a changing center of gravity caused by the movement of the ball 20 within the hollow tube 18. However, the ball 20 can be made out of any hard material that can be shaped into a ball, such as plastics, wood, and the like. Also, combinations of materials can be used to manufacture the ball 20.

The head portion 14 can be shaped to facilitate the side-to-side movement of the lure 10 as it moves through the water. This side-to-side movement can help attract fish. Additionally, the side-to-side movement can facilitate the movement of the ball 20 laterally within the hollow tube 18. For example, the head portion can be configured to rotate the lure body side-to-side substantially about an axis in the x-direction as the lure moves through water. Of course, other factors can be included in or on the lure to facilitate this vibration, such as line placement, weight distribution, lip shape, etc.

The lure body 12 is shown to be generally shaped to resemble a bait fish in the embodiments shown in Figs. 1-2. However, the lure body 12 can be designed to resemble bait fish or other aquatic species that are typical food sources for the targeted fish. In fact, lure body 12 can be shaped to resemble many different types of bait fish while still remaining within the scope of the present disclosure.

In an effort to make the lure aesthetically realistic, the lure body 12 can be colored any desired color or combination of colors. For example, colored plastics or rubber may be used to form the lure body 12. In addition, the lure body 12 can be painted or stained on its external surface to achieve the desired color and marking characteristics. For example, the lure body 12 can include various ornamental designs, such as eyes, fins, scales, coloring, and other decorative features, that may be painted onto the surface or otherwise added to the lure body 12.

Generally, the lure body 12 can be made of any material suitable for being shaped into a lure body. The lure body 12 will typically be molded from malleable plastic material (e.g., thermoplastics, thermosetting plastics, etc.) as is commonly known in the art. Alternatively, the lure body can be constructed from a metal material. In one particular embodiment, the lure body 12 is molded into a hard body (e.g., molded plastic or metal). However, soft plastics can be utilized to form the lure body 12.

The lure body 12 is generally attached to a fishing line to be fished. For example, referring to Figure 1, the lure body 12 defines an eyelet 22 for connection to the fishing line 24. As is known in the art, the fishing line 24 can be connected to the eyelet 22 by any mechanism (e.g., a knot, a crimp, etc.).

The fishing lure 10 is also shown having two treble hooks 26 attached to the lure body 12. However, the lure 10 can have only a single hook (either mono, double, or treble), or a plurality of hooks attached to the lure body. The hook(s) can be attached to the lure body 12 according to any mechanism. Likewise, other shapes and sizes of hooks can be used with lure 10. The hook 26 can be positioned in other areas and by other methods on lure 10. In another embodiment, the lure 10 can be a "teaser lure" having no hooks, which is designed to attract fish to the teaser to allow the angler to catch the fish with another lure or net. Such teaser lures are often utilized with a "bait and switch" fishing technique, sometimes using the teaser to attract the fish and a fly rod setup to catch the fish.

The tail portion 16 of the lure body 12 is substantially shaped to come to a point in the shown embodiment. However, in other embodiments, the tail portion 16 of the lure body 12 can be shaped to define a fin that adds more life-like movement to lure 10 while being fished, if desired. In fact, the tail portion 16 can be shaped to form any shape desired.

Other features can be included on or within the lure. For example, a weight (not shown) can be included to help control the depth of the lure 10 while be fished. Other diving element can also be utilized on lure 10, such as a diving plane or lip.

These and other modifications and variations to the present invention may be practiced by those of ordinary skill in the art, without departing from the spirit and scope of the present invention, which is more particularly set forth in the appended claims. In addition, it should be understood the aspects of the various embodiments may be interchanged both in whole or in part. Furthermore, those of ordinary skill in the art will appreciate that the foregoing description is by way of example only, and is not intended to limit the invention so further described in the appended claims.

## Claims

1. A fishing lure configured to produce an audible noise while being fished, the fishing lure comprising:
a lure body (12) defining a x-direction, a y-direction and a z-direction, wherein the x-direction extends from a head portion (14) to a tail portion (16) of the lure body, and wherein the y-direction is substantially perpendicular to the x-direction and extends from one side of the lure body to an opposite side of the lure body;
a hollow tube (18) positioned within the lure body, and oriented substantially in the y-direction; and
a ball (20) positioned within the hollow tube such that the ball can move freely with the hollow tube to produce the audible noise.

2. A fishing lure as in claim 1, **characterized in that** the hollow tube has a cylindrical shape.

3. A fishing lure as in claim 2, **characterized in that** the hollow tube defines a circular body and two ends such that the audible sound is produced when the ball strikes each end of the hollow tube.

4. A fishing lure as in claim 1, **characterized in that** the lure body defines two side walls, and the hollow tube defines two ends such that each end of the hollow tube is substantially flush with one of the side walls of the lure body.

5. A fishing lure as in claim 1, **characterized in that** the hollow tube comprises metal.

6. A fishing lure as in claim 1, **characterized in that** the ball comprises metal.

7. A fishing lure as in claim 1, **characterized in that** the ball is spherical.

8. A fishing lure as in claim 1, **characterized in that** the lure body defines a head portion (14) configured to rotate the lure body (12) side-to-side substantially about an axis in the x-direction as the lure moves through water.

9. A fishing lure as in claim 1, **characterized in that** the lure body resembles a bait fish.

10. A fishing lure as in claim 1, **characterized in that** the lure body comprises a molded plastic material.

11. A fishing lure as in claim 1, **characterized in that** the lure body defines an aperture (13).

12. A fishing lure as in claim 11, **characterized in that** the hollow tube is adhered to the lure body within the aperture with an adhesive.

13. A fishing lure as in claim 11, **characterized in that** the aperture (13) is extending across the lure body substantially in the y-direction.

14. A fishing lure as in claim 13, **characterized in that** the hollow tube (18) is positioned within the aperture (13).

15. A method of fishing using a fishing lure, the method comprising
casting a fishing lure into a body of water, wherein the fishing lure comprises a lure body (12), a hollow tube (18), and a ball (20), the hollow tube is positioned within the lure body and is oriented substantially in a y-direction across the lure body, and wherein the ball is positioned within the hollow tube; and
moving the fishing lure through the body of water such that when the fishing lure moves through the water, the ball moves from one end of the hollow tube to the other end causing an audible sound to be emitted by the fishing lure.
